# EUROPEAN PATENT SPECIFICATION

(11) **EP 2 461 620 B1**
(45) Date of publication and mention of the grant of the patent: **13.12.2017**
(21) Application number: 11150028.6
(22) Date of filing: 03.01.2011
(51) Int. Cl.: H04W 24/06, H04W 24/10

(54) **Method for processing test measurement information across networks in a mobile communication system**
Verfahren zur Verarbeitung von Prüfmessdaten über Netzwerke in einem mobilen Kommunikationssystem
Procédé de traitement d'informations de mesure de test sur des réseaux dans un système de communication mobile

(30) Priority: 01.12.2010 EP 10193308
(43) Date of publication of application: 06.06.2012
(73) Proprietor: Telia Company AB, 106 63 Stockholm (SE)
(72) Inventor: Dahlén, Anders, S-137 34, Västerhaninge (SE); Frank, Robert, S-116 62, Stockholm (SE); Falk, Lars, S-217 66, Malmö (SE)
(74) Representative: Papula Oy

(56) References cited:
- US-A1- 2007 026 854
- KYOCERA: "Inter-RAT MDT data retrieval and MDT (re)-configuration", 3GPP DRAFT; R2-104813, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 17 August 2010 (2010-08-17), XP050451954, [retrieved on 2010-08-17]
- QUALCOMM CDMA TECHNOLOGIES: "Requirements for Management of UE based Performance Measurements for MDT", 3GPP DRAFT; S5-101379 REQUIREMENTS FOR MDT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. Montreal, Canada; 20100510, 2 May 2010 (2010-05-02), XP050440486, [retrieved on 2010-05-02]
- KYOCERA: "Cross-RAT logged data Retrieval & MDT Configuration", 3GPP DRAFT; R2-103863, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451266, [retrieved on 2010-06-22]
- NTT DOCOMO ET AL: "Re-configurability of logged MDT measurements", 3GPP DRAFT; R2-102906_MDT RECONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 4 May 2010 (2010-05-04), XP050423187, [retrieved on 2010-05-04]
- "3rd Generation Partnership Project; Technical Specification Group TSG RAN Universal Terrestrial Radio Access (UTRA) and Evolved Universal Terrestrial Radio Access (E-UTRA); Radio measurement collection for Minimization of Drive Tests (MDT); Overall description; Stage 2 (Release 10)", 3GPP STANDARD; 3GPP TS 37.320, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 22 September 2010 (2010-09-22) , pages 1-15, XP050442198, [retrieved on 2010-09-22]
- HTC: "Clarification on timer T326", 3GPP DRAFT; R2-106217 CLARIFICATION ON TIMER T326 25.331 REL-10 CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467054, [retrieved on 2010-11-09]
- NOKIA SIEMENS NETWORKS ET AL: "Logged MDT reporting when roaming", 3GPP DRAFT; R2-106238, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jacksonville, USA; 20101115, 9 November 2010 (2010-11-09), XP050467064, [retrieved on 2010-11-09]

## Description

### BACKGROUND OF THE INVENTION

### Field of the invention:

The invention relates to mobile communications networks and test measurements regarding the radio interface. Particularly, the invention relates to a method for processing test measurement information across networks a mobile communication system.

### Description of the Related Art:

Radio network planning is an important part in the building and maintaining of a cellular mobile communication network. In Radio network planning it is determined, for example, the placing of base stations, the required dimensioning of base station transmitters and receivers, and base station parameterization governing transmission power or frequency allocation. Today there are sophisticated tools for automatically determining the placing of base stations in the area of the network. It is possible in these tools to define closely certain elementary characteristics of the network area such the landscape and buildings. However, despite of these tools it is necessary to perform series of tests in the actual real environment to determine the actual radio quality and coverage provided. The tests may also be performed in response to customer complaints or special events that require extra capacity of the network. These tests are referred to as drive tests, because such tests are often executed by driving in various places within the network area. Naturally, such tests are often performed on foot, and are often performed even inside buildings. The drive tests usually require significant resources in terms of personnel and fuel consumption. The 3G Partnership Project (3GPP) there is ongoing work in the area of Minimizing Drive Tests (MDT). In MDT a base station may send test configuration to a mobile station, which tells the mobile station what the measurements requested are, when they are reported and what information is stored in test logs. The mobile stations used for these measurements may not necessarily be used by the network operator. Instead, normal subscriber mobile stations may be used, for example, in areas where there is no access for operator personnel. The subscriber may be made aware of these measurements or they may be gathered in the background.

However, there is a problem when a mobile station changes network. The radio network related measurements gathered in the area of a given network operator are usually considered to comprise valuable information for competing operators. Therefore, as a rule network operators do not want to share that kind of information with other network operators, at least in larger quantities. Normal mobile stations do not usually display technical radio measurement information for end users. Naturally, nothing prevents the measuring of radio quality parameters by anyone with right equipment. However, such equipment is costly and requires systematic and skilled use. When drive tests are executed, it would be beneficial to be able to manage automatically whether drive tests may be executed across different networks. In some cases networks with different network identifiers such as mobile country codes and mobile network codes may be operated by the same network operator or by different co-operating networks. Therefore, mere prevention of drive tests spanning multiple networks is not enough.

Reference publication R2-104813 from 3GPP TSG-RAN WG2 #71, Madrid, Spain, 23 - 27 August 2010 discloses options for retrieving automated drive test log information from a network different from the network that initiated the automated drive test. The options allow an evolved UMTS Radio Access Network (UTRAN) to be informed of a test log gathered to a UE. The options allow the UTRAN to request the test log using a request message and to obtain the test log from the UE in a response message.

Reference publication S5-101379 from 3GPP TSG-SA5 Meeting SA5#71, 10 - 14 May 2010, Montreal, Canada discloses that network operators should have the ability to collect coverage data from an automated drive test across Radio Access Technology (RAT) boundaries. Crossing RAT boundary should not stop the drive test data collection. The reference publication also discloses that a network operator shall be able to configure measurement data collection from specific UEs in a specific geographical area.

### SUMMARY OF THE INVENTION:

According to an aspect of the invention, the invention is a method, comprising: receiving information on current network to a mobile node; receiving cross network test management information to the mobile node, the cross network test management information comprising an explicit list of networks for which a test log is not to be cleared; receiving a test configuration to the mobile node, the test configuration defining at least one radio interface related measurement; detecting a change of network at the mobile node; checking a need to clear the test configuration based on the cross network test management information; and checking a need to clear the test log based on the cross network test management information.

According to a further aspect of the invention, the invention is a mobile node apparatus, comprising: a memory; and at least one processor configured to receive information on current network, to receive cross network test management information, the cross network test management information comprising an explicit list of networks for which a test log is not to be cleared, to receive a test configuration, the test configuration defining at least one radio interface related measurement, to detect a change of network, and to check a need to clear the test configuration based on the cross network test management information.

According to a further aspect of the invention, the invention is a system, comprising: a mobile node configured to receive information on current network, to receive cross network test management information, the cross network test management information comprising an explicit list of networks for which a test log is not to be cleared, to receive a test configuration, the test configuration defining at least one radio interface related measurement, to detect a change of network, to check a need to clear the test configuration based on the cross network test management information and to check a need to clear the test log based on the cross network test management information; and a radio network node configured to transmit information on current network, to transmit cross network test management information, the cross network test management information comprising an explicit list of networks for which a test log is not to be cleared, to transmit a test configuration, the test configuration defining at least one radio interface related measurement.

According to a further aspect of the invention, the invention is a computer program comprising code adapted to perform the following steps when executed on a data-processing system: receiving information on current network; receiving cross network test management information, the cross network test management information comprising an explicit list of networks for which a test log is not to be cleared; receiving a test configuration, the test configuration defining at least one radio interface related measurement; detecting a change of network; checking a need to clear the test configuration based on the cross network test management information; and checking (310) a need to clear the test log based on the cross network test management information.

In one embodiment of the invention, the method further comprises checking a need to clear test log information based on the cross network test management information.

In one embodiment of the invention, the method further comprises checking a permission to report test log information in the new network based on the cross network test management information.

In one embodiment of the invention, the method further comprises checking whether a test defined in the test configuration may be continued in the new network based on the cross network test management information.

In one embodiment of the invention, the method further comprises receiving information on at least two equivalent networks to the mobile node.

In one embodiment of the invention, the cross network test management information comprises separate information for change of network to a network among the at least two equivalent networks and for change of network to other networks.

In one embodiment of the invention, the cross network test management information is provided to mobile node in association with the test configuration.

In one embodiment of the invention, the cross network test management information is test configuration specific.

In one embodiment of the invention, the network is a public land mobile network.

In one embodiment of the invention, the method further comprises receiving first information on at least two first equivalent networks to the mobile node; receiving second information on at least two second equivalent networks to the mobile node; detecting a second change of network at the mobile node; checking a need to clear the test configuration based on the cross network test management information and the first information on at least two first equivalent networks.

In one example of the invention, the test is a drive test.

In one example of the invention, the method further comprises associating the information on the at least two equivalent networks with the cross network test management information in the mobile node, changing network to a second network by the mobile node, the second network being mentioned in the information on the at least two equivalent networks, receiving second information on at least two second equivalent networks to the mobile node, detecting a change of network to a third network, and checking a need to delete the test configuration based on the cross network test management information and the information on the at least two equivalent networks, from the network from which the cross network test management information was received.

In one example of the invention, the test configuration from a given network is considered using cross network test management information and information on equivalent networks from that particular network. The consideration of a test configuration may comprise at least one of the deletion of the test configuration, the deletion of test log pertaining to the test configuration, and continuing of the test in a further network.

In one example of the invention, the test configuration is associated by the mobile node with the cross network test management information and the information on equivalent networks. Thereby, the test configuration is associated always with the cross network test management information and the information on equivalent networks from the network that sent the test configuration. When moving to a further network and from there to an even further network, the mobile node may check, for a test configuration, the cross network test management information and the information on the least two equivalent networks sent by the network that sent the test configuration.

In one example of the invention, the cross network test management information comprises information on at least one of requirement to delete test configuration when moving to a different network, requirement to delete test configuration when moving to a different equivalent network and requirement to delete test configuration when moving to a different non-equivalent network.

In one example of the invention, the cross network test management information comprises information on at least one of requirement to delete test log when moving to a different network, requirement to delete test log when moving to a different equivalent network and requirement to delete test log when moving to a different non-equivalent network.

In one example of the invention, the cross network test management information comprises information on at least one of allowing of the reporting of test log in different network, allowing of the reporting of test log in different equivalent network and allowing of the reporting of test log in a different non-equivalent network.

In one example of the invention, the radio network node comprises a UMTS Long-Term Evolution (LTE) nodeB, in other words, an eNodeB. In one embodiment of the invention, the radio network node is any base station or a controller unit associated with at least one base station. In one embodiment of the invention, the radio network node is a Radio Network Controller (RNC) or a Base Station Controller (BSC). The radio network may be a GSM Edge Radio Access Network (GERAN) or a UMTS Radio Access Network (UTRAN).

In one example of the invention, events determined to be logged in the test configuration comprise at least one of periodic timer, radio quality becoming worse than a predefined threshold, transmit power headroom becoming less than a predefined threshold, failure to obtain a channel, random access failure, paging channel failure, broadcast channel failure and radio link failure.

In one example of the invention, regarding events encountered, the log may comprise information on at least one of the cell where the event took place, a GPS location where the event took place, a geographic location where the event took place, at least one cell measurement at the time of the event, at least one radio environment measurement, timestamp of the event, user equipment transmit power at the time of the event, tracking area of the event, location area of the event, routing area of the event and availability of a dedicated preamble.

In one example of the invention, the radio environment measurements comprise at least one of received signal code power of the pilot channel, energy per chip to total received power (Ec/No) of the pilot channel, received signal code power of the common control physical channel, interference on signal code power of the common control physical channel and reference signal received power of the common control physical channel.

In one example of the invention, the test log is cleared by the mobile node at the time of reporting the log to the radio network node.

In one example of the invention, the cross network test management information and test configuration are received in separate messages from a base station such as an eNodeB or NodeB.

In one example of the invention, the cross network test management information and test configuration are received in separate messages from a Radio Network Controller (RNC) via a NodeB, which is a UMTS base station.

In one example of the invention, the cross network test management information and test configuration are received in separate messages from a Base Station Controller (BSC) via a Base Station (BS), which may, for example, be a GERAN BS.

In one example of the invention, the cross network test management information is received in association with test configuration, for example, in a single message from a base station such as an eNodeB or NodeB.

In one example of the invention, the cross network test management information is provided to the eNodeB from a management node.

In one example of the invention, the cross network test management information is specific to a given test configuration.

In one example of the invention, the cross network test management information comprises an explicit list of networks for which test configuration or log is to be deleted or not to be deleted.

In one example of the invention, the system may comprise an OFDMA based system. In one example of the invention, the system may comprise a 4G network, for example, an LTE system. In one example of the invention, the system may comprise an Ultra Mobile Broadband system. In embodiment of the invention, the system may comprise a multiple-input and multiple-output based system. In one example of the invention, the system may comprise an Evolution Data Only (EVDO) network. In one example of the invention, the system may be any cellular radio system. In one example of the invention, the system comprises at least one of AMPS, GSM, UMTS, GPRS and CDMA2000.

In one example of the invention, said system comprises a mobile communication network. In one example of the invention, the mobile node, in other words, User Equipment (UE) comprises a mobile station or generally a mobile terminal. In one example of the invention a user of a mobile terminal is identified using a subscriber module, for example, User Services Identity Module (UMTS) or a Subscriber Identity Module (SIM). The combination of Mobile Equipment (ME) and a subscriber module may be referred to as a mobile subscriber.

In one example of the invention, the system comprises at least one of a Global System of Mobile Communications (GSM) network, a Universal Mobile Telephone System (UMTS) network and a 4G system such as LTE Evolved Packet System (EPS). The mobile station may be, for example, a GSM mobile station or a UMTS mobile station or an EPS user equipment with a dual mode or multimode functionality to support different access types.

In one embodiment of the invention, the computer program is stored on a computer readable medium. The computer readable medium may be a removable memory card, a removable memory module, a magnetic disk, an optical disk, a holographic memory or a magnetic tape. A removable memory module may be, for example, a USB memory stick, a PCMCIA card or a smart memory card.

In one example of the invention, the cross network test management information comprises information on whether to clear or not to clear test configuration in equivalent networks. The cross network test management information may comprise information on whether to clear or not to clear test configuration in non-equivalent networks. By in a network is meant the network to which the mobile node moves, that is, changes network, or is about to move.

In one example of the invention, the cross network test management information comprises information on whether to clear test configuration always, never to clear test configuration or to clear test configuration in non-equivalent networks. By in a network is meant the network to which the mobile node moves, that is, changes network, or is about to move.

In one example of the invention, the cross network test management information comprises information on a list of network in which the test configuration must be cleared or in which the test configuration must not be cleared. By in a network is meant the network to which the mobile node moves, that is, changes network, or is about to move, or is about to move.

In one example of the invention, the cross network test management information comprises information on where the test configuration must be deleted and where the log must be deleted. For both there could be separate information that specifies deletion in all networks, no deletion on in any network, and deletion in non-equivalent networks. By in a network is meant the network to which the mobile node moves, that is, changes network, or is about to move.

In one example of the invention, the cross network test management information comprises information on whether reporting of test log is allowed in a different network or whether reporting is allowed in a non-equivalent network. By in a network is meant the network to which the mobile node moves, that is, changes network, or is about to move.

In one example of the invention, the information on equivalent networks is network specific, that is, associated with the network from which it has been received. Therefore, the information on equivalent networks, for example, an equivalent network list received from a given network is associated with the cross network test management information received from that network. When evaluating cross network test management information from a given network, the equivalence of a network to which the mobile node is moving, is determined on the basis of the information on equivalent networks from that network.

In one example of the invention, the method further comprises associating the cross network test management information received with in the mobile node with an identifier of the current network.

In one embodiment of the invention, the method further comprises retrieving the cross network test information in response to detecting a change of network at the mobile node by using an identifier of the network to be entered as a key.

In one example of the invention, the method further comprises retrieving the cross network test information in response to detecting a change of network at the mobile node by using an identifier of the network to be leaved as a key.

The benefits of the invention are related to minimizing of tests needed to provide information on the radio interface quality and to the avoiding of the leaking of radio interface measurement information from a first network to a second network.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** is a block diagram illustrating three Public Land Mobile Networks (PLMNs) applying a method for the processing of test measurement information across networks in one embodiment of the invention;
**Fig. 2** is a message sequence chart illustrating a method for the processing of test measurement information across networks in one embodiment of the invention;
**Fig. 3** is a flow chart illustrating a method for the processing of test measurement information across networks in one embodiment of the invention; and
**Fig. 4** is a block diagram illustrating a mobile node in one embodiment of the invention.

### DETAILED DESCRIPTION OF THE EMBODIMENTS:

Reference will now be made in detail to the embodiments of the present invention, examples of which are illustrated in the accompanying drawings.

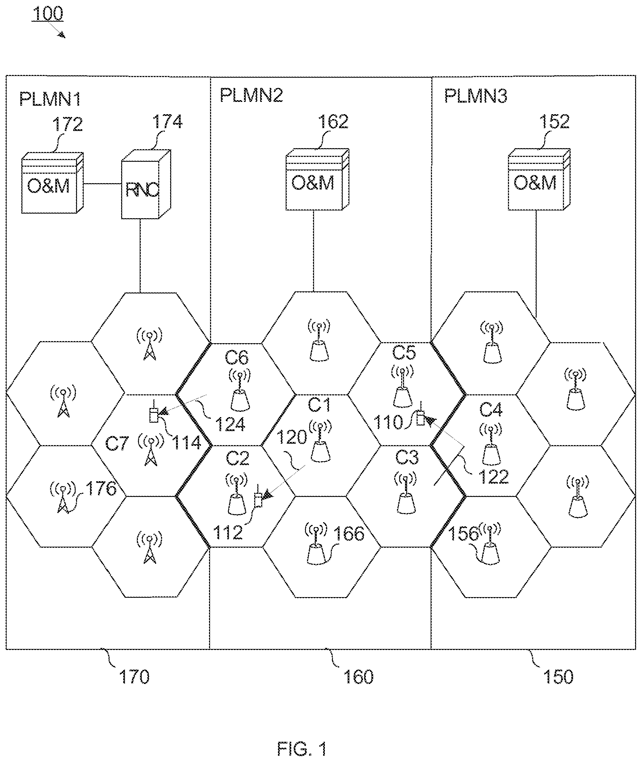

Figure 1 is a block diagram illustrating three Public Land Mobile Networks (PLMNs) applying a method for the processing of test measurement information across networks in one embodiment of the invention. In Figure 1 there is illustrated a system 100 comprising three PLMNs, namely PLMNs 170, 160 and 150. PLMN 170 comprising an operations and maintenance centre 172, a Radio Network Controller (RNC), a nodeB 176 and at least one cell such as cell C7. A nodeB is a base station. PLMN 160 comprises an operations and maintenance centre 162, an evolved node B (eNodeB) 166, and at least one cell such as cells C1, C2, C3, C5 and C6. PLMN 150 comprises an operations and maintenance centre 150, an evolved node B (eNodeB) 156 and at least one cell such as cell C4. PLMN 170 is a network with a UTRAN radio network, while PLMNs 160 and 150 are networks with an E-UTRAN radio network.

In Figure 1 RNCs and eNodeBs may obtain test configurations from operation and maintenance centres 172, 162 and 152. In the case of nodeBs the test configuration is provided from RNC 174 via a nodeB such as NodeB 176. The RNCs and eNodeBs may provide the test configurations to mobile nodes in selected cells that may be associated with problem areas from which customer complaints have been received. The selected cells may also belong to areas where the network is being expanded and updated with new equipment or where the tuning of cell parameters takes place. The test configurations provide information on the events to be tested. The events may relate to radio interface quality or may be related to quality of service experienced on any protocol layer.

In Figure 1 it may be assumed that PLMNs 160 and 150 indicate to mobile nodes in their area that PLMNs 160 and 150 are equivalent PLMNs. The indication is obtained to mobile nodes in these PLMNs, for example, in response to tracking area update requests sent to Mobility Management Entities (MME) (not shown). Similarly, it may be assumed that PLMN 170 does not indicate PLMNs 160 and 150 as equivalent.

In Figure 1 a mobile node 112 moves from cell C1 to cell C2 as illustrated with arrow 120. If mobile node 112 has received from the eNodeB in cell C1 a test configuration requesting logging of at least one event with a trigger to log events for a specific period and the eNodeB in cell C1 has indicated to mobile node 112 that the test log may not be reported outside the area of equivalent PLMNs 160 and 150, the test log is not deleted and the test configuration is kept when the mobile node changes cell, because the new cell C2 belongs to PLMN 160, which is the same PLMN.

In Figure 1 a mobile node 114 moves from cell C6 to cell C7 as illustrated with arrow 124. If mobile node 114 has received from the eNodeB in cell C6 a test configuration comprising logging of at least one event with a trigger to log events for a specific period and the eNodeB in cell C6 has indicated to mobile node 114 that the test log may not be reported outside the area of equivalent PLMNs 160 and 150, the test log and the test configuration is deleted when the mobile node changes cell, because the new cell C7 belongs to a different PLMN 170, which has not been indicated as an equivalent PLMN, for example, by the eNodeB of cell C6 or any previous eNodeB of PLMN 160. In one embodiment of the invention, the eNodeB in cell C6 may indicate to mobile node 114 separate instructions regarding whether the test log should be deleted and whether the test configuration should be deleted. The instruction to delete the test configuration may also indicate that the test log must also be deleted.

In Figure 1 a mobile node 110 moves first from cell C3 to C4 and then from cell C4 to C5 as illustrated with arrow 122. Mobile node 110 receives in cell C3 a test configuration comprising logging of at least one event with a trigger to log for a specific period (not shown). Because the log period exceeds the time mobile node 110 camps in cell C3, the logging of events continues in cell C4. Further, because the log period exceeds the time mobile node 110 camps in cell C4, the logging of events continues in cell C5. Mobile node 110 receives in cell C3, for example, an indication that the test log may not be reported outside the area of equivalent PLMNs 160 and 150 and that the test configuration must be deleted when moving outside the area of equivalent PLMNs 160 and 150. When mobile node 110 changes PLMN 160 to PLMN 150 while moving from cell C3 to C4 the test log and the test configuration is not deleted, because PLMNs 160 and 150 have been indicated as equivalent PLMNs. Similarly, when mobile node 110 changes PLMN 150 to PLMN 160 while moving from cell C4 to C5 the test log and the test configuration is not deleted, because PLMNs 160 and 150 have been indicated as equivalent PLMNs. While in cell C5 mobile node 110 may report the test log pertaining to the test configuration obtained in cell C3 to the eNodeB of cell C5. The test log may be reported further to operations and maintenance centre 162 by the eNodeB of cell C5.

The embodiments of the invention described hereinbefore in association with Figure 1 may be used in any combination with each other. Several of the embodiments may be combined together to form a further embodiment of the invention.

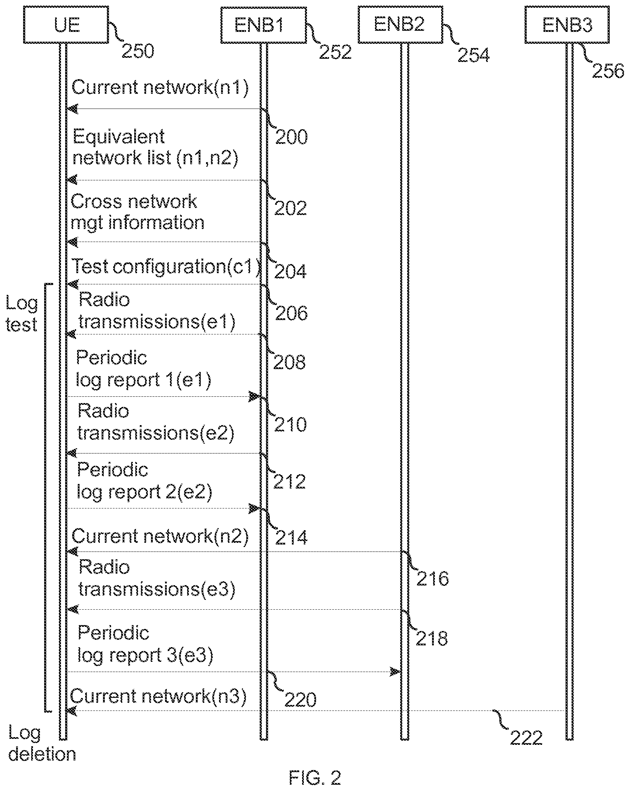

Figure 2 is a message sequence chart illustrating a method for the processing of test measurement information across networks in one embodiment of the invention.

In Figure 2 there is a mobile node 250, in other words, User Equipment (UE). There is also eNodeBs 252, 254 and 256, that is, base stations. It may be assumed that eNodeBs 252 and 254 belong to different equivalent networks, that is, a first network and a second network, while eNodeB 256 belongs to a non-equivalent separate network, that is, a third network. The eNodeBs may also be base stations or nodeBs.

In one embodiment of the invention, the networks are Public Land Mobile Networks (PLMN). In one embodiment of the invention, at least one network is a 4G network. In one embodiment of the invention, at least one network is a 3G network.

As illustrated with arrow 200, mobile node 250 receives from eNodeB 252 information on the current network. The information on the current network may be a mobile network code and a mobile country code.

As illustrated with arrow 202, mobile node 250 receives from eNodeB 252 information on equivalent networks. The information on equivalent networks may be in the form of an equivalent network list comprising identifiers for the first and the second networks.

In one embodiment of the invention, the information on equivalent networks may be received, for example, during a tracking area update procedure, a routing area update procedure or a location area update procedure. The information may be received from a subscriber information server, a home subscriber server, a mobile management entity, a home location register, a visitor location register, a mobile switching center server, a mobile switching center or a radio network node such as eNodeB 252.

As illustrated with arrow 204, mobile node 250 receives from eNodeB 252 cross network test management information, for example, cross PLMN management information. In the example of Figure 2 it is assumed that the cross network test management information comprises information that indicates that tests may be continued in equivalent networks such as the first network and the second network, but not in non-equivalent networks such as the third network. It is also assumed in the example that the test configuration is to be deleted when moving to a non-equivalent network such as the third network.

In one embodiment of the invention, the cross network test management information is provided to mobile node 250 in association with the providing of a test configuration.

In one embodiment of the invention, the cross network test management information is test configuration specific, that is, concerns only, for example, test configuration c1. In this way, the operator may decide, for example, that particular tests may be limited to a particular network.

In one embodiment of the invention, cross network test management information is provided to mobile node 250 by each network the mobile node 250 visits. The mobile node 250 may store one cross network test management information configured for each visited network during a test configuration lifetime, or it may overwrite cross network test management information whenever a new network sends a new cross network test management information configuration. The cross network test management information configured by a network comprises information on how to act in that network and when leaving that network. The information how to act in a network may comprise permission to report a test log in that network.

In one embodiment of the invention, mobile node 250 stores cross network test management information separate for each network. In other words, the cross network test management information comprises entries for each network that may be indexed with a network identifier. The entry for a given network comprises test configuration information received in that network. Thus, each entry comprises the information disclosed herein regarding generally cross network test management information. A cross network test management information entry for a network may be kept for a lifetime of a test configuration, for example, determined by the time event logging to a test file is to be performed. A cross network test management information entry for a given network may also be stored and, thus, replaced always when received from that network anew.

In one embodiment of the invention, the cross network test management information comprises information on at least one of requirement to delete test configuration when moving to a different network, requirement to delete test configuration when moving to a different equivalent network and requirement to delete test configuration when moving to a different non-equivalent network.

In one embodiment of the invention, the cross network test management information comprises information on at least one of requirement to delete test log when moving to a different network, requirement to delete test log when moving to a different equivalent network and requirement to delete test log when moving to a different non-equivalent network.

In one embodiment of the invention, the cross network test management information comprises information on at least one of allowing of the reporting of test log in different network, allowing of the reporting of test log in different equivalent network and allowing of the reporting of test log in a different non-equivalent network.

In one embodiment of the invention, the information on equivalent networks is associated with the cross network test management instructions.

As illustrated with arrow 206, mobile node 250 receives from eNodeB 252 a test configuration. The test configuration comprises the logging of at least one event for a specified time, that is, a lifetime of the test configuration. In the example in Figure 2, the test configuration c1 comprises the logging of events e1, e2 and e3 to a log, which may comprise at least one log file.

In one embodiment of the invention, the test configuration is associated with the cross network test management instructions from the network from which the test configuration is received.

In one embodiment of the invention, the events comprise at least one of periodic timer, radio quality becoming worse than a predefined threshold, transmit power headroom becoming less than a predefined threshold, failure to obtain a channel, random access failure, paging channel failure, broadcast channel failure and radio link failure.

As illustrated with arrow 208, mobile node 250 receives from eNodeB 252 a number of radio transmissions. The radio transmissions trigger event e1. During the transmission mobile node 250 may also transmit information towards eNodeB 252.

As illustrated with arrow 210, mobile node 250 issues a periodic log report to eNodeB 252. The log report may be issued at times specified in the test configuration c1. The log comprises information on event e1.

In one embodiment of the invention, regarding events encountered, the log may comprise information on at least one of the cell where the event took place, a GPS location where the event took place, a geographic location where the event took place, at least one cell measurement at the time of the event, at least one radio environment measurement, timestamp of the event, user equipment transmit power at the time of the event, tracking area of the event, location area of the event, routing area of the event and availability of a dedicated preamble.

In one embodiment of the invention, the radio environment measurements comprise at least one of received signal code power of the pilot channel, energy per chip to total received power (Ec/No) of the pilot channel, received signal code power of the common control physical channel, interference on signal code power of the common control physical channel and reference signal received power of the common control physical channel.

As illustrated with arrow 212, mobile node 250 receives from eNodeB 252 a number of radio transmissions. The radio transmissions trigger event e2. During the transmission mobile node 250 may also transmit information towards eNodeB 252.

As illustrated with arrow 214, mobile node 250 issues a periodic log report to eNodeB 252. The log report may be issued at times specified in the test configuration c1. The log report comprises at least event e2.

In one embodiment of the invention, at the time of the reporting of the log, the log is cleared by mobile node 250.

In one embodiment of the invention, logging continues to separate log files for each network. The log is cleared for certain network(s) where data was logged but not necessary all log files.

In one embodiment of the invention, mobile node 250 is configured to store and update a separate log file for each network mobile node 250 visits. As determined by cross network test management information for a given network, a log file for that network is deleted or kept when leaving that network.

In one embodiment of the invention, mobile node 250 is configured to store a single log file which is associated with a plurality of networks.

In one embodiment of the invention, logging continues to same log file independent of network, thus there is only one log file. When the log is cleared all logged data is cleared independent of network where data was logged.

As illustrated with arrow 216, mobile node 250 receives from eNodeB 254 a radio transmission indicating that the cell received by mobile node 250 belongs to the second network, that is, network n2. The indication is received, for example, in a cell broadcast from eNodeB 254.

As illustrated with arrow 218, mobile node 250 receives from eNodeB 254 a number of radio transmissions. The radio transmissions trigger event e3. During the transmission mobile node 250 may also transmit information towards eNodeB 254.

As illustrated with arrow 220, mobile node 250 issues a periodic log report to eNodeB 254. The log report may be issued at times specified in the test configuration c1. The log report comprises at least event e3.

As illustrated with arrow 222, mobile node 250 receives from eNodeB 256 a radio transmission indicating that the cell received by mobile node 250 belongs to the third network, that is, network n3. The indication is received, for example, in a cell broadcast from eNodeB 256. In response, mobile node 250 deletes the log regarding test configuration c1. It may be assumed, for example, that mobile node 250 does not have any other test configurations. In response, mobile node 250 may also delete the test configuration c1. Thereupon, there may be no test configurations in mobile node 250 and mobile node 250 only performs, for example, normal handover related measurements. It should be noted that mobile node 250 may be considered for test configuration c1 the equivalent network list (n1, n2) received from the network that sent test configuration c1 and the cross network test management instructions from the network that sent test configuration c1.

The embodiments of the invention described hereinbefore in association with Figure 2 may be used in any combination with each other. Several of the embodiments may be combined together to form a further embodiment of the invention.

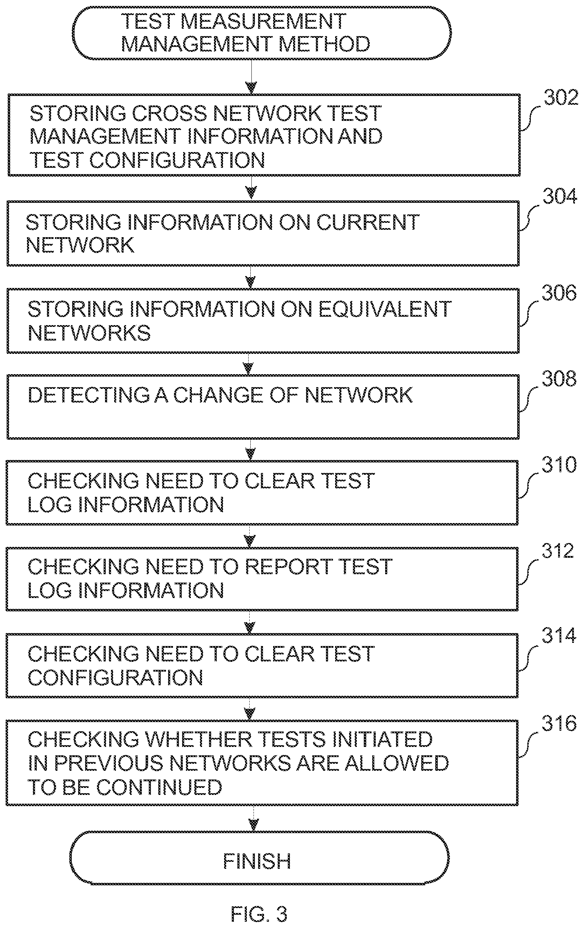

Figure 3 is a flow chart illustrating a method for the processing of test measurement information across networks in one embodiment of the invention.

At step 302 a mobile node stores cross network test management information and test configuration.

In one embodiment of the invention, the cross network test management information and test configuration are received in separate messages from a base station such as an eNodeB or from an RNC via a NodeB.

In one embodiment of the invention, the cross network test management information is received in association with test configuration, for example, in a single message from a base station such as an eNodeB or from an RNC via a NodeB.

In one embodiment of the invention, the cross network test management information is provided to the eNodeB or to the RNC from a management node.

In one embodiment of the invention, the cross network test management information is specific to a given test configuration.

In one embodiment of the invention, the cross network test management information is specific to a given network.

In one embodiment of the invention, the cross network test management information comprises an explicit list of networks for which test configuration or log is to be deleted or not to be deleted.

In one embodiment of the invention, the cross network test management information comprises an explicit list of networks in which reporting of the log may be performed or may not be performed.

At step 304 the mobile node stores information on the current network.

At step 306 the mobile node stores information on equivalent networks. The information comprises information on at least one equivalent network.

At step 308 the mobile node detects a change of network.

At step 310 the mobile node may check a need to clear test log information based on the cross network test management information, in response to the change of the network.

At step 312 the mobile node may check a need to report test log information based on the cross network test management information, in response to the change of the network.

At step 314 the mobile node checks a need to delete test configuration based on the cross network test management information, in response to the change of the network.

In one embodiment of the invention, the cross network test management information tells when the test configuration is to be deleted at the change of the network. The deletion may be based on at least one of the new network to the network that initiated the test belonging to a list of equivalent networks and the new network belonging to an explicit list of networks for which the deletion is to be performed or for which the deletion is not to be performed.

In one embodiment of the invention, the cross network test management information tells when the test log is to be deleted at the change of the network. The deletion may be based on at least one of the new network to the network that initiated the test belonging to a list of equivalent networks and the new network belonging to an explicit list of networks for which the deletion is to be performed or for which the deletion is not to be performed.

In one embodiment of the invention, the cross network test management information tells when the test log may be sent in another network than the network initiating the test. The sending may be based on at least one of the new network and the network that initiated the test belonging to a list of equivalent networks, and the new network belonging to an explicit list of networks for which the sending is to be performed or for which the sending is not to be performed.

In one embodiment of the invention, there is default cross network test management information that determines the behavior of the mobile node when changing the network regarding the test configuration and logs in the absence of receiving explicit cross network test management information.

At step 316 the mobile node may check based on the cross network test management information whether tests initiated in previous networks are allowed to be continued in the new network.

The embodiments of the invention described hereinbefore in association with Figure 3 may be used in any combination with each other. Several of the embodiments may be combined together to form a further embodiment of the invention.

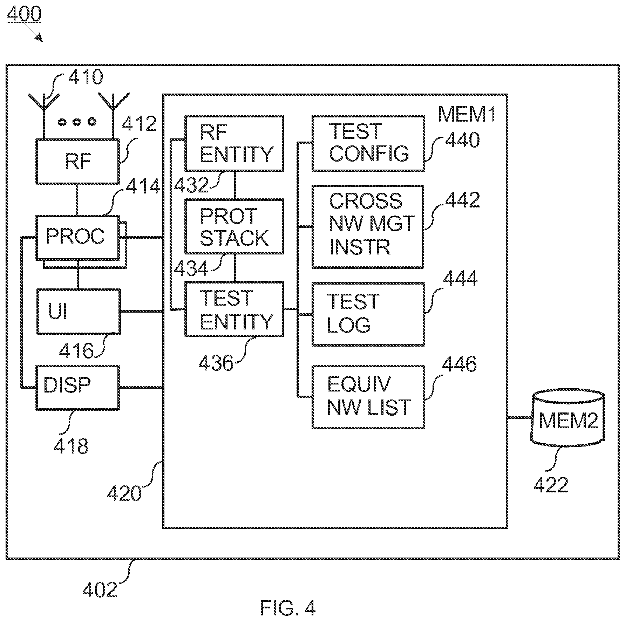

Figure 4 is a block diagram illustrating an apparatus in one embodiment of the invention. In Figure 4 there is an apparatus 400, which is, for example, a mobile node, user equipment, cellular phone or a mobile terminal. The internal functions of mobile node 400 are illustrated with a box 402. Mobile node 400 comprises at least one antenna 410. There may be multiple input and output antennas. In association with mobile node there is Radio Frequency (RF) circuit 412. RF circuit 412 is communicatively connected to at least one processor 414. Connected to processor 414 there is a first memory 420, which is, for example, a Random Access Memory (RAM). There is also a second memory 422, which is a non-volatile memory, for example, an optical or magnetic disk. There is also a User Interface (UI) 416 and a display 418. In memory 420 there is stored software relating to functional entities 432, 434 and 436. An RF entity 432 communicates with RF circuit 412 to perform radio related measurements and to obtain measurement results. There is a protocol stack entity 434 which comprises the user plane and control plane protocol functions related to the interface towards an eNodeB, a NodeB or any base station. There is also a test entity 436, which controls the storing of test configurations, the deletion of test configurations when the network changes, logging of test results and deletion of the log regarding a given test configuration. Test entity 436 stores and accesses a test configuration 440, cross network test management information 442, a test log 444 and an equivalent network list 446. Test configuration 440, cross network test management information 442, a test log 444 and an equivalent network list 446 may also be stored to non-volatile memory 422. When the at least one processor 414 executes functional entities associated with the invention, memory 420 comprises entities such as, any of the functional entities 432, 434 and 436. The functional entities within apparatus 400 illustrated in Figure 4 may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The functional entities may be implemented as separate computer programs or as a single computer program comprising several routines or functions implementing the entities. The program blocks are stored on at least one computer readable medium such as, for example, a memory circuit, memory card, magnetic or optic disk. Some functional entities may be implemented as program modules linked to another functional entity. The functional entities in Figure 4 may also be stored in separate memories and executed by separate processors, which communicate, for example, via a message bus or an internal network within the network node. An example of such a message bus is the Peripheral Component Interconnect (PCI) bus.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (for instance, voice, modem, and the like), wireless communications media, one or more wireless communications networks, cellular communications networks, 3G communications networks, 4G communications networks Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method, comprising:
receiving (304) information (200) on current network (160) to a mobile node (110,112,114);
receiving (204) cross network test management information (302) to the mobile node (110,112,114), the cross network test management information comprising an explicit list of networks (306) for which a test log is not to be cleared;
receiving (302) a test configuration (206) to the mobile node (110,112,114), the test configuration (206) defining at least one radio interface related measurement;
detecting (308) a change (122,124) of network (170,150) at the mobile node; checking (314) a need to clear the test configuration (206) based on the cross network test management information (204); and
checking (310) a need to clear the test (206) log based on the cross network test management information (204).

2. The method according to claim 1, the method further comprising:
checking a permission to report test log information in the new network (150,170) based on the cross network test management information (204).

3. The method according to claim 1 or 2, the method further comprising:
checking whether a test defined in the test configuration (206) may be continued in the new network (150,170) based on the cross network test management information (204).

4. The method according to any preceding claim, the method further comprising:
receiving first information (202) on at least two equivalent networks to the mobile node.

5. The method according to claim 4, wherein the cross network test management information (204) comprises separate information for change of network to a network among the at least two equivalent networks (150, 160) and for change of network to other networks.

6. The method according to claim 1, the method further comprising:
receiving first information on at least two first equivalent networks to the mobile node (110,112,114);
receiving second information on at least two second equivalent networks to the mobile node;
detecting a second change of network at the mobile node (110,112,114);
checking a need to clear the test configuration based on the cross network test management information and the first information on at least two first equivalent networks.

7. The method according to any preceding claim, wherein the cross network test management (204) information is provided to mobile node (110,112,114) in association with the test configuration (206).

8. The method according to any preceding claim, wherein the cross network test management information (204) is test configuration (206) specific.

9. The method according to any preceding claim, wherein the network (150,160,170) is a public land mobile network.

10. A mobile node apparatus, comprising:
a memory (420); and
at least one processor (414) configured to receive (304) information on current network (160), to receive (302) cross network test management information (204), the cross network test management information (204) comprising an explicit list of networks (150,160,170) for which a test (206) log is not to be cleared, to receive (302) a test configuration (206), the test configuration (206) defining at least one radio interface related measurement, to detect (308) a change of network (122,124), to check (314) a need to clear the test configuration based on the cross network test management information (204), and to check (310) a need to clear the test (206) log based on the cross network test management (204) information.

11. A system, comprising:
the apparatus according to claim 10; and
a radio network node (252) configured to transmit information on current network, to transmit cross network test management information (204), the cross network test management information comprising an explicit list of networks (150,160) for which a test log is not to be cleared, to transmit a test configuration (206), the test configuration (206) defining at least one radio interface related measurement.

12. A computer program comprising code adapted to perform the following steps when executed on a data-processing system:
receiving (304) information on current network;
receiving (302) cross network test management information, the cross network test management information comprising an explicit list of networks for which a test log is not to be cleared;
receiving (302) a test configuration, the test configuration defining at least one radio interface related measurement;
detecting (308) a change of network; checking (314) a need to clear the test configuration based on the cross network test management information; and
checking (310) a need to clear the test log based on the cross network test management information.

13. The computer program according to claim 12, wherein said computer program is stored on a computer readable medium.

## Patentansprüche

1. Verfahren umfassend:
Empfangen (304) einer Information (200) über ein derzeitiges Netzwerk (160) zu einem mobilen Knoten (110, 112, 114);
Empfangen (204) einer netzwerkübergreifenden Testmanagementinformation (302) zu dem mobilen Knoten (110, 112, 114), wobei die netzwerkübergreifende Testmanagementinformation eine explizite Liste von Netzwerken (306) umfasst, für die ein Testprotokoll nicht gelöscht werden muss;
Empfangen (302) einer Testkonfiguration (206) zu dem mobilen Knoten (110, 112, 114), wobei die Testkonfiguration (206) zumindest eine auf eine Radioschnittstelle bezogene Messung definiert;
Erfassen (308) einer Änderung (170, 150) eines Netzwerkes an dem mobilen Knoten; Überprüfen (314) eines Bedarfs, die Testkonfiguration (206) zu löschen basierend auf der netzwerkübergreifenden Testmanagementinformation (204); und
Überprüfen (310) eines Bedarfs, das Test-(206) Protokoll zu löschen basierend auf der netzwerkübergreifenden Testmanagementinformation (204).

2. Verfahren nach Anspruch 1, wobei das Verfahren ferner umfasst:
Überprüfen einer Erlaubnis, eine Testprotokollinformation in dem Netzwerk (150, 170) zu berichten basierend auf der netzwerkübergreifenden Testmanagementinformation (204).

3. Verfahren nach Anspruch 1 oder 2, wobei das Verfahren ferner umfasst:
Überprüfen, ob ein Test, der in der Testkonfiguration (206) definiert ist, in dem Netzwerk (150, 170) fortgesetzt werden kann basierend auf der netzwerkübergreifenden Testmanagementinformation (204).

4. Verfahren nach einem der vorstehenden Ansprüche, wobei das Verfahren ferner umfasst:
Empfangen einer ersten Information (202) über zumindest zwei äquivalente Netzwerke zu dem mobilen Knoten.

5. Verfahren nach Anspruch 4, wobei die netzwerkübergreifende Testmanagementinformation (204) eine getrennte Information für eine Änderung von einem Netzwerk zu einem Netzwerk unter den zumindest zwei äquivalenten Netzwerken (150, 160) und für eine Änderung von einem Netzwerk zu anderen Netzwerken umfasst.

6. Verfahren nach Anspruch 1, wobei das Verfahren ferner umfasst:
Empfangen einer ersten Information über zumindest zwei erste äquivalente Netzwerke zu dem mobilen Knoten (110, 112, 114);
Empfangen einer zweiten Information über zumindest zwei zweite äquivalente Netzwerke zu dem mobilene Knoten;
Erfassen einer zweiten Änderung eines Netzwerks an dem mobilen Knoten (110, 112,114);
Überprüfen eines Bedarfs, die Testkonfiguration zu löschen basierend auf der netzwerkübergreifenden Testmanagementinfomation und der ersten Information über zumindest zwei erste äquivalente Netzwerke.

7. Verfahren nach einem der vorstehenden Ansprüche, wobei die netzwerkübergreifende Testmanagement -(204) Information zu dem mobilen Knoten (110, 112, 114) in Assoziation mit der Testkonfiguration (206) bereitgestellt wird.

8. Verfahren nach einem der vorstehenden Ansprüche, wobei die netzwerkübergreifende Testmanagementinformation (204) Testkonfigurations-(206) spezifisch ist.

9. Verfahren nach einem der vorstehenden Ansprüche, wobei das Netzwerk (150, 160, 170) ein Public Land Mobile Network ist.

10. Mobiles Knotengerät, umfassend:
einen Speicher (420); und
zumindest einen Prozessor (414), der konfiguriert ist, um eine Information über ein derzeitiges Netzwerk (160) zu empfangen (304), eine netzwerkübergreifende Testmanagementinformation (204) zu empfangen (302), wobei die netzwerkübergreifende Testmanagementinformation (204) eine explizite Liste von Netzwerken (150, 160, 170) umfasst, für die ein Test-(206) Protokoll nicht gelöscht werden muss, eine Testkonfiguration (206) zu empfangen (302), wobei die Testkonfiguration (206) zumindest eine auf eine Radioschnittstelle bezogene Messung definiert, eine Änderung eines Netzwerks (122, 124) zu erfassen, einen Bedarf zu überprüfen (314), die Testkonfiguration zu löschen basierend auf der netzwerkübergreifenden Testmanagementinformation (204) und einen Bedarf zu überprüfen, das Test- (206) Protokoll zu löschen basierend auf der netzwerkübergreifenden Testmanagement- (204) Information.

11. System umfassend:
das Gerät nach Anspruch 10; und
einen Radionetzwerkknoten (252), der konfiguriert ist, eine Information über ein derzeitiges Netzwerk zu transmittieren; eine netzwerkübergreifende Testmanagementinformation (204) zu transmittieren, wobei die netzwerkübergreifende Testmanagementinformation eine explizite Liste von Netzwerken (150, 160) umfasst, für die ein Testprotokoll nicht gelöscht werden muss, eine Testkonfiguration (206) zu transmittieren, wobei die testkonfiguration (206) zumindest eine auf eine Radioschnittstelle bezogene Messung definiert.

12. Computerprogramm umfassend einen Code, der eingerichtet ist, um die folgenden Schritte durchzuführen, wenn er auf einem datenverarbeitenden System ausgeführt wird:
Empfangen (304) einer Information über ein derzeitiges Netzwerk;
Empfangen (302) einer netzwerkübergreifenden Testmanagementinformation, wobei die netzwerkübergreifende Testmanagementinfomation eine explizite Liste von Netzwerken umfasst, für die ein Testprotokoll nicht gelöscht werden muss;
Empfangen (302) einer Testkonfiguration, wobei die Testkonfiguration zumindest eine auf eine Radioschnittstelle bezogene Messung definiert;
Erfassen (308) einer Änderung eines Netzwerks; Überprüfen (314) eines Bedarfs, die Testkonfiguration zu löschen basierend auf der netzwerkübergreifenden Testmanagementinformation; und
Überprüfen (310) eines Bedarfs, das Testprotokoll zu löschen basierend auf der netzwerkübergreifenden Testmanagementinformation.

13. Computerprotramm nach Anspruch 12, wobei das Computerprogramm auf einem computerlesbaren Medium gespeichert ist.

## Revendications

1. Procédé, consistant à :
recevoir (304) des informations (200) concernant un réseau actuel (160) à un noeud mobile (110, 112, 114) ;
recevoir (204) des informations de gestion de test sur un réseau interconnecté (302) au noeud mobile (110, 112, 114), les informations de gestion de test sur un réseau interconnecté comprenant une liste explicite de réseaux (306) pour lesquels un journal de test ne doit pas être effacé ;
recevoir (302) une configuration de test (206) au noeud mobile (110, 112, 114), la configuration de test (206) définissant au moins une mesure liée à une interface radio ;
détecter (308) un changement (122, 124) de réseau (170, 150) au noeud mobile ; la vérification (314) d'une nécessité d'effacer la configuration de test (206) sur la base des informations de gestion de test sur un réseau interconnecté (204) ; et
vérifier (310) une nécessité d'effacer le journal de test (206) sur la base des informations de gestion de test sur un réseau interconnecté (204).

2. Procédé selon la revendication 1, le procédé consistant en outre à :
vérifier une permission de communiquer des informations de journal de test dans le nouveau réseau (150, 170) sur la base des informations de gestion de test sur un réseau interconnecté (204).

3. Procédé selon la revendication 1 ou 2, le procédé consistant en outre à :
vérifier si un test défini dans la configuration de test (206) peut être poursuivi dans le nouveau réseau (150, 170) sur la base des informations de gestion de test sur un réseau interconnecté (204).

4. Procédé selon l'une quelconque des revendications précédentes, le procédé consistant en outre à :
recevoir des premières informations (202) sur au moins deux réseaux équivalents au noeud mobile.

5. Procédé selon la revendication 4, dans lequel les informations de gestion de test sur un réseau interconnecté (204) comprennent des informations distinctes pour un changement d'un réseau à un réseau parmi les au moins deux réseaux équivalents (150, 160) et pour un changement d'un réseau à d'autres réseaux.

6. Procédé selon la revendication 1, le procédé consistant en outre à :
recevoir des premières informations sur au moins deux premiers réseaux équivalents au noeud mobile (110, 112, 114) ;
recevoir des secondes informations sur au moins deux seconds réseaux équivalents au noeud mobile ;
détecter un second changement de réseau au noeud mobile (110, 112, 114) ;
vérifier une nécessité d'effacer la configuration de test sur la base des informations de gestion de test sur un réseau interconnecté et des premières informations sur les au moins deux premiers réseaux équivalents.

7. Procédé selon l'une quelconque des revendications précédentes, dans lequel les informations de gestion de test sur un réseau interconnecté (204) sont fournies à un noeud mobile (110, 112, 114) en association avec la configuration de test (206).

8. Procédé selon l'une quelconque des revendications précédentes, dans lequel les informations de gestion de test sur un réseau interconnecté (204) sont une configuration de test (206) spécifique.

9. Procédé selon l'une quelconque des revendications précédentes, dans lequel le réseau (150, 160, 170) est un réseau mobile terrestre public.

10. Appareil de noeud mobile, comprenant :
une mémoire (420) ; et
au moins un processeur (414) configuré pour recevoir (304) des informations concernant un réseau actuel (160), pour recevoir (302) des informations de gestion de test sur un réseau interconnecté (204), les informations de gestion de test sur un réseau interconnecté (204) comprenant une liste explicite de réseaux (150, 160, 170) pour lesquels un journal de test (206) ne doit pas être effacé, pour recevoir (302) une configuration de test (206), la configuration de test (206) définissant au moins une mesure liée à une interfaces radio, pour détecter (308) un changement de réseau (122, 124), pour vérifier (314) une nécessité d'effacer la configuration de test sur la base des informations de gestion de test sur un réseau interconnecté (204), et pour vérifier (310) une nécessité d'effacer le journal de test (206) sur la base des informations de gestion de test sur un réseau interconnecté (204).

11. Système, comprenant :
l'appareil selon la revendication 10 ; et
un noeud de réseau radio (252) configuré pour transmettre des informations sur un réseau actuel, pour transmettre des informations de gestion de test sur un réseau interconnecté (204), les informations de gestion de test sur un réseau interconnecté comprenant une liste explicite de réseaux (150, 160) pour lesquels un journal de test ne doit pas être effacé, pour transmettre une configuration de test (206), la configuration de test (206) définissant au moins une mesure liée à une interfaces radio.

12. Programme informatique comprenant un code adapté pour réaliser les étapes suivantes lorsqu'il est exécuté sur un système de traitement de données :
la réception (304) d'informations concernant un réseau actuel ;
la réception (302) d'information de gestion de test sur un réseau interconnecté, les informations de gestion de test sur un réseau interconnecté comprenant une liste explicite de réseaux pour lesquels un journal de test ne doit pas être effacé ;
la réception (302) d'une configuration de test, la configuration de test définissant au moins une mesure liée à une interfaces radio ;
la détection (308) d'un changement de réseau ; la vérification (314) d'une nécessité d'effacer la configuration de test sur la base des informations de gestion de test sur un réseau interconnecté ; et
la vérification (310) d'une nécessité d'effacer le journal de test sur la base des informations de gestion de test sur un réseau interconnecté.

13. Programme informatique selon la revendication 12, dans lequel ledit programme informatique est stocké sur un support lisible sur ordinateur.
